# EUROPEAN PATENT APPLICATION

(11) **EP 2 469 828 A1**
(43) Date of publication of application: **27.06.2012**
(21) Application number: 11157707.8
(22) Date of filing: 10.03.2011
(51) Int. Cl.: H04M 19/04

(54) **Device and method for generating a muffle compensated ring signal**

(30) Priority: 23.12.2010 US 426544 P
(71) Applicant: Sony Ericsson Mobile Communications AB, 221 88 Lund (SE)
(72) Inventor: Folkesson, Tobias, 234 39, LOMMA (SE); Bunk, Richard, 247 60, VEBERÖD (SE)
(74) Representative: Banzer, Hans-Jörg

(57) **Abstract**

The present invention relates a method and a mobile communication device for generating a muffle-compensated ring signal in response to detecting that the mobile communicating device is in a muffling environment. The method comprises the steps of emitting a reference sound by a loudspeaker (14) of the communication device and then measuring the acoustic of thereof at a microphone (16) of the same device. The acoustic response is analyzed by searching for characteristics that indicate that the mobile communication is slowed away in a muffling environment, and if such characteristics are found compensating for the muffling environment by automatically adjusting the ring signal in response to the specific characteristics of the acoustic response

## Description

### TECHNICAL FIELD

The present invention relates to a method and device for generating a ring signal in a mobile communication device and specially a muffle compensated ring signal.

### BACKGROUND

Communication devices, such as cellular telephones, have become increasingly versatile and are not longer used only for making and receiving phone calls. The applications of today include for example applications that allow users to do as send/receive text messages, play games, watch TV, play music, take pictures, etc. As a result, cellular telephones are part of every day life and are therefore carried around by the user in some convenient way. Usually it is carried in a pocket, in a special case attached to a belt or similar, in a handbag, a backpack or the like.

Since the cellular phone is carried around it is also often exposed to noisy environments. This might cause a problem when the cellular phone is ringing or activated in some other way. It may be difficult for a user to perceive such a signal on time in order to respond to it due to the background noise.

Most cellular phones therefore include some mechanisms for adjusting the volume of the ring signal in response to the noise of the surrounding environment. One way is to provide the cellular phone with a user interface that defines different user profiles, which each define the type of ring signal to be used depending on the situation the user is in, such as a loud ring signal, a vibrating signal etc. Such user profile may be set manually by the user, for example putting the cellular phone in vibrating mode when selecting the profile "meeting".

One other solution to this problem could of course be to constantly keep the ring signal at a high level. However, loud ring volumes may cause hearing damages and also tend to be very disturbing in quiet environments, Maximum allowed ring signals are therefore regulated by cellular phone standards.

Another way to adapt the ring signal is to first check the input level of the microphone, i.e. high for a noisy environment and low for a quiet environment, and adapting the ring signal level in response thereto.

However, this method does not work very well when the device is carried in a pocket, bag or the like since the noise picked up by the microphone may by damped or muffled by the surrounding in which the cellular phone is kept, which makes the emitted ring signal softer. What makes this situation even more problematic is that the same muffling effect that damps the surrounding noise also will dampen the already soft ring signal even more. This will result in a risk that the user completely misses the call.

### SUMMARY

Thus, there is an apparent need for adapting the ring signal level in a mobile communication device to the muffling effect that the mobile communication device may be subjected too when it is stowed away in a pocket, bag or the like. This may be achieved by detecting if the mobile communication device is located in a muffling environment or not and then automatically compensate for the muffled loudspeaker sound.

According to a first aspect of the invention a method is provided for generating a muffle-compensated ring signal in a mobile communication device in response to detecting that the mobile communicating device is in a muffling environment. The method comprises the steps of emitting a reference sound by a loudspeaker of the communication device and then measuring the acoustic response thereof at a microphone of the same device. The acoustic response is analyzed by searching for characteristics that indicate that the mobile communication is stowed away in a muffling environment, and if such characteristics are found compensating for the muffling environment by automatically adjusting the ring signal in response to the specific characteristics of the acoustic response.

In a preferred embodiment of the method according to the present invention the step of adjusting the ring signal may comprise such steps as increasing the ring volume, shifting the ring tone frequency towards lower frequencies, changing the ring signal or melody, increasing the pulse frequency of the ring signal or activating the vibrator of the mobile communication device. These adjustment steps may be used as a single step or as any combination of some or all of the listed adjustment steps.

In another preferred embodiment of the present invention the emitted reference sound is preferably a white-noise pulse.

I yet another preferred embodiment the emitted reference sound will be sent out continuously during an incoming call until the call is accepted or cancelled.

According to a second aspect of the present invention there is provided a mobile communication device capable of generating a muffle-compensated ring signal in response to detecting that the mobile communicating device is in a muffling environment. The mobile communication device comprises a loudspeaker, a microphone and processing logic, where the processing logic of the mobile communication device is configured to execute the steps performed according to the first aspect and the different embodiments thereof.

According to a third aspect of the present invention a computer program comprising code means is accomplished for performing the steps of the method of the present invention when the program is run on the processing logic.

According to a fourth aspect of the present invention a computer program product comprising program code means stored on a computer readable medium is accomplished for performing the method of the present invention, when said product is run on the processing logic.

### BRIEF DESCRIPTION OF THE DRAWINGS

The present invention will now be described in closer detail with reference to the accompanying drawings, which are incorporated in and constitute a part of this specification, in which:
Fig. 1 is a front view of a cellular phone in connection with which the present invention may be used,
Fig. 2 is a block diagram of a cellular phone in accordance with the present invention,
Fig. 3 is a flow chart showing the method for adapting the ring signal level in accordance with the present invention, and
Fig. 4 is a diagram showing the emitted reference and a typical response pertaining to a mobile communication device stowed away in a muffling environment.

### DETAILED DESCRIPTION

A mobile communication device according to the present invention will now be described in relation to a cellular telephone, which is a preferred variation of the invention. However, a muffle-compensated ring signal may also be implemented in other mobile communication devices making use of a ring signal or alert signal such as a cordless telephone, a PDA, a lap top computer, a media player, such as a MP3 player or the like or any other type of portable device having a microphone and means for outputting a ring or alert signal.

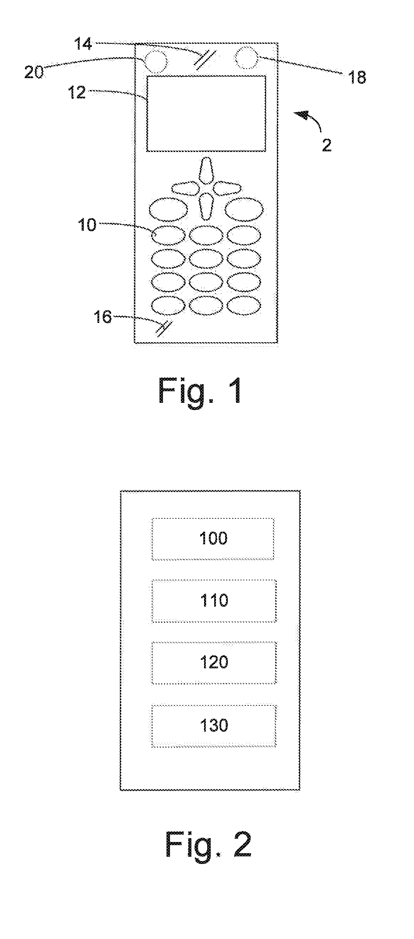

Figure 1 show an exemplary mobile communication device 2, in which the method for generating a muffle-compensated ring signal according to the present invention may be implemented. As shown the mobile communication device 2 may include control buttons or keys 10, a display 12, a loudspeaker 14, a microphone 16, a camera 18 and a sensor 20.

It should be understood that the mobile communication device 2 is surrounded by a housing, not specially denoted in figure 1, which may protect the mobile communication device 2 from wear and outside elements. The housing is designed to hold various elements of the mobile communication device 2, such as the display 12, the camera 18 and the sensor 20 etc as is well known by a person skilled in the art. Also the speaker 14 and the microphone 16 are well known elements of a mobile communication device 2 and are therefore, as such, not discussed any further. When it comes to the display 12 it may be an ordinary display or a touch sensitive display. The control buttons or keys 10 may then be omitted if the display is a touch sensitive display, which is configured to show virtual keys or control buttons. Of course, as is realized by a skilled person a combination of hardware keys and virtual keys may also be used.

Figure 2 shows a block diagram of components usually present in a mobile communication device 2. A mobile communication device may include input means 100, output means 110, processing logic 120 and memory means 130. The mobile communication device 2 may be configured in a number of different ways and include other or different elements as is well known by a person in the art, such as modulators, demodulators, encoders, decoders etc. for processing data.

The input means 100 may include all mechanisms that a user uses in order to input information into the mobile communication device, such as a microphone 16, a touch sensitive display 12 and keys 10 etc. Also the camera 18 and the sensor 20 may be defined as input means 100.

Output means 110 may include all devices that output information from the mobile communication device including the display 12, the loudspeaker 14 etc. The processing logic 120 may include one or more processors, microprocessors, application specific integrated circuits or the like. The processing logic 120 may execute software instructions/programs or data structures in order to control the operation of the mobile communication device 2. The memory means 130 may be implemented as a dynamic storage device, a static storage device, a flash memory etc. The memory means 130 may be used to store information and/or instructions for execution by the processing logic 120, temporary variables or intermediate information during execution of instructions by the processing logic 120 etc.

In the following the method according to the present invention will be described in an exemplary way with reference to a cellular phone.

When the cellular phone is stored away in a pocket, handbag or the like, which is often the case it will be difficult to hear the ring signal due to the damping or muffling effect of the material, often textile, fabric etc., surrounding the cellular phone. Therefore the output ring signal level will be low when it is stowed away, even if it actually should be high since most of the ring signal is likely to be absorbed by the surrounding material.

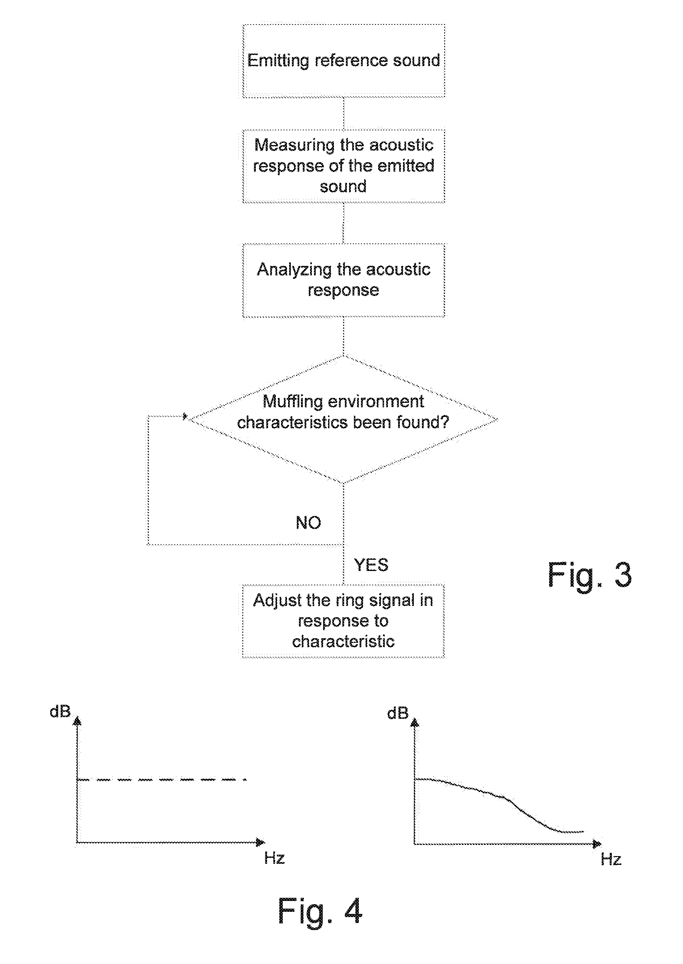

In order to better understand the invention the method will now be described with reference to figure 3. In a first step the loudspeaker 14 of the cellular phone will emit a reference sound, which for example may be a white-noise pulse as depicted in the left hand side of figure 4. However, the reference sound may be any type of pulse for which one knows the response in a muffling environment. In parallel to the generation of the reference sound the microphone 16 of the same cellular telephone measures the acoustic response, an example of which is depicted in the right hand side of figure 4. The acoustic response is then analyzed, for example by using frequency-envelope analysis, in order to determine if the cellular phone is surrounded by a sound absorbing material or not. In other words the analyzing is done by searching for characteristics in the acoustic response that indicates that the cellular phone is stowed away in a muffling environment. Turning now to the acoustic response depicted in the right hand side of figure 4, it may be seen that there is a characteristic dip in the higher frequencies, while most of the lower frequencies are intact. This is a very typical response when a cellular phone is surrounded by soft material like textiles, fabrics, cloth or the like, i.e. is in a muffling environment.

It should be noted that the characteristic acoustic response depicted in the right hand side of figure 4 is the response to a reference sound constituted by a white-noise pulse and that the use of other reference sounds will give different responses as is appreciated by a person skilled in the art.

In a preferred embodiment different predefined responses are stored in the memory means 130 and are compared to the measured acoustic response in the analyzing phase in order to determine the type of muffling environment in which the cellular phone is present. The predefined, responses may be measured and stored for a lot of different muffling environments.

When the specific muffling environment has been found in the analyzing step, this information may be used to look up correction parameters, which are used to compensate for the muffling environment by automatically adjusting the ring signal in response to the found specific characteristic. The ring signal may dependent on the correction parameters be adjusted in a number of different ways, such as increasing the ring volume, shifting the ring tone frequency towards lower frequencies, changing the ring signal or melody, increasing the pulse frequency of the ring signal or switching on the vibrator of the cellular phone. Each adjustment or a combination of two or more adjustments may correspond to a specific characteristic and associated predefined set of correction parameters. Thus, by matching the adjustment scheme to a specific characteristic the output ring signal may be optimized to the present environment of the cellular phone.

The emitted reference sound may be any sound sent out by the loudspeaker 14, but is preferably white-noise as mentioned above. It may be sent out periodically during times when the cellular phone is waiting for receiving a call, or it may be triggered by an incoming call and thereafter continuously sent out as long as the ring signal is ringing and the incoming call has not yet been answered or cancelled. It should be understood that each time the reference sound is sent out and the response has been analyzed a new set of predetermined correction parameters are determined, i.e. the predetermined correction parameters may be updated periodically or continuously. However, as is readily understood by a person skilled in the art there are many variations in how and when the reference sound is sent out. It is also possible that the reference sound is generated by some other device than the loudspeaker 14, even it is preferred to use the loudspeaker 14 already present since it will kept down the total amounts of components used in the cellular phone. In one embodiment of the present invention the reference sound may be the ring signal itself. Thus, in this embodiment the reference sound (ring signal) may be updated by the predefined correction parameters.

In order to increase the certainty when determining the muffling environment in which the cellular phone is present it might be useful to collect information about the ambient light conditions. This may for example be made by the camera 18 or by the light sensor 20, which may be present in most cellular phones of today. If the ambient light conditions are dark it is likely that cellular phone is stowed away in a pocket, bag or the like. Thus, by using both the acoustic response and the prevailing light conditions the accuracy of the determination of muffling situation may be increased. The other way around it may be determined that the cellular phone is not in a muffling situation due to the detected bright ambient light conditions.

The above mentioned and described embodiments are only given as examples and should not be limiting to the present invention. Other solutions, uses, objectives, and functions within the scope of the invention as claim in the below described patent claims should be apparent for the person skilled in the art.

## Claims

1. A method for generating a muffle-compensated ring signal in a mobile communication device in response to detecting that the mobile communicating device is in a muffling environment, the method comprising the steps of,
emitting a reference sound by a loudspeaker (14),
measuring the acoustic response of the of said emitted sound at a microphone (16),
analyzing the acoustic response by searching for characteristics that indicate that the mobile communication is stowed away in a muffling environment, and if such characteristics are found,
compensating for the muffling environment by automatically adjusting the ring signal in response to the specific characteristics of the acoustic, response.

2. The method according to claim 1, wherein the step of adjusting the ring signal comprises the step of increasing the ring volume.

3. The method according to claim 1 or 2, wherein the step of adjusting the ring signal further comprises the step of shifting the ring tone frequency towards lower frequencies.

4. The method according to any of previous claims, wherein the step of adjusting the ring signal further comprises the step of increasing the pulse frequency of the ring signal.

5. The method according to any of the preceding claims, wherein the emitted reference sound is a white-noise pulse.

6. The method according to any of the preceding claims, wherein the emitted reference sound is sent out continuously during an incoming call until the call is accepted or cancelled.

7. A mobile communication device capable of generating a muffle-compensated ring signal in response to detecting that the mobile communicating device is in a muffling environment, comprising a loudspeaker (14), a microphone (16) and processing logic (120), where the processing logic (120) of the mobile communication device is configured to execute the following steps,
emitting a reference sound by the loudspeaker (14),
measuring the acoustic response of the of said emitted sound at the microphone (16),
analyzing the acoustic response by searching for characteristics that indicate that the mobile communication is stowed away in a muffling environment, and if such characteristics are found,
compensating for the muffling environment by automatically adjusting the ring signal in response to the specific characteristics of the acoustic response.

8. The mobile communication device according to claim 7, wherein the processing logic is further configured to adjusting the ring signal by increasing the ring volume.

9. The mobile communication device according to claim 7 or 8, wherein the processing logic is further configured to adjusting the ring signal by shining the ring tone frequency towards lower frequencies.

10. The mobile communication device according to any of claims 7 to 9, wherein the processing logic is further configured to adjusting the ring signal by increasing the pulse frequency of the ring signal.

11. The mobile communication device according to any of claims 7 to 10, wherein the processing logic is further configured to emit a white-noise pulse as the emitted preference sound.

12. The mobile communication device according to any of claims 7 to 11, wherein the processing logic is further configured to emit the reference sound continuously during an incoming call until the call is accepted or cancelled.

13. A computer program comprising code means for performing the steps of any one of the claims 1-6, when the program is run on a processing logic (120).

14. A computer program product comprising program code means stored on a computer readable medium for performing the method of any of the claims 1-6, when said product is run on a processing logic (120).
